# FASCICULE DE BREVET EUROPEEN

(11) **EP 3 707 694 B1**
(45) Date de publication et mention de la délivrance du brevet: **05.01.2022**
(21) Numéro de dépôt: 18827156.3
(22) Date de dépôt: 09.11.2018
(51) Int. Cl.: G09B 23/28

(54) **SYSTÈME DE SIMULATION D'ACTE CHIRURGICAL**
SYSTEM ZUR SIMULATION EINES CHIRURGISCHEN EINGRIFFS
SYSTEM FOR SIMULATING A SURGICAL PROCEDURE

(30) Priorité: 10.11.2017 FR 1760601
(43) Date de publication de la demande: 16.09.2020
(73) Titulaire: Virtualisurg, 92200 Neuilly-sur-Seine (FR)
(72) Inventeur: MIGNAN, Nicolas, 92200 Neuilly-sur-Seine (FR); JOLIVET, Erwan, 92200 Neuilly-sur-Seine (FR)
(74) Mandataire: Icosa
(86) Numéro de dépôt international: PCT/FR2018/052799
(87) Numéro de publication internationale: WO 2019/092382

(56) Documents cités:
- EP-A2- 2 068 295
- WO-A1-2017/059860
- WO-A1-2017/098036
- US-A1- 2014 342 334

## Description

### DOMAINE DE L'INVENTION

La présente invention concerne un système de simulation d'acte chirurgical pour la formation et l'entrainement des chirurgiens.

### ÉTAT DE LA TECHNIQUE

L'apprentissage du métier de chirurgien se fait aujourd'hui par la théorie, par l'observation de cas pratiques puis par la réalisation de l'acte sur des patients réels sous la surveillance d'un chirurgien plus expérimenté.

Il est nécessaire que le chirurgien en formation pratique des actes chirurgicaux afin de se familiariser avec une pratique à maitriser. Or le métier de chirurgien impose une rigueur, une précision et une délicatesse afin d'éviter une mauvaise manipulation des outils. Un problème est qu'en présence de patients, une mauvaise manipulation peut entrainer des complications comme le perçage ou la rupture d'un vaisseau sanguin ou d'un organe. Ce type d'accidents implique souvent une prise en charge en urgence du patient par une chirurgie invasive et potentiellement dangereuse pour la survie du patient.

Il est donc important que le chirurgien puisse s'entrainer à la pratique d'actes chirurgicaux sans faire intervenir un patient.

Ainsi, il existe un besoin de sécuriser les phases opératoires et les phases d'apprentissage pratiques dans la formation des chirurgiens pour réaliser des exercices manipulatoires potentiellement dangereux lorsqu'ils sont exercés chez un patient.

Il existe des méthodes d'entrainement à la chirurgie via des simulateurs pédagogiques. Par exemple, un chirurgien stagiaire manipule un joystick pour interagir avec un milieu virtuel afin de simuler un acte chirurgical. Il existe également des systèmes de capteurs de la position des mains pour contrôler et guider la simulation d'acte chirurgical.

Cependant, un premier inconvénient est que l'apprenant ne retrouve pas les mêmes conditions sensorielles que lors d'une opération.

Le document EP0935796 divulgue un système destiné à former des personnes pour l'exécution de procédures chirurgicales mini-invasives. Ce dispositif comprend un boitier ayant des ouvertures pour l'insertion d'un outil. Une fois inséré, l'instrument peut bouger en translation axiale et en rotation. Cet instrument est relié à un système de guidage et de capteurs à l'intérieur du boitier. Le dispositif comprend également un écran sur lequel est diffusée une vidéo représentant le corps d'un patient animé par un cycle respiratoire et un rythme cardiaque. L'écran superpose à cette vidéo la position dans le monde virtuel de l'instrument du chirurgien.

Il est également connu, le document US2016/133158 décrivant un dispositif d'entrainement comprenant des instruments de chirurgie et une structure de support configurée pour restreindre le mouvement des instruments de chirurgie. La limitation du mouvement des instruments dans un volume imite la limitation de mouvement rencontré en chirurgie mini-invasive. Ce document divulgue également la génération d'un environnement virtuel et le traçage des mouvements des instruments afin d'intégrer une représentation de ces instruments dans l'environnement virtuel généré.

Le document US2017/251900 divulgue également un dispositif d'entrainement comprenant une surface et un logement pour loger un fourreau. Ce document divulgue un système de caméra permettant de reproduire l'intérieur du dispositif sur un écran.

Document US20140342334 décrit un dispositif d'entraînement pour réaliser un acte chirurgical concernant une hernie.

Un premier inconvénient est que les sensations de l'apprenant ne sont pas comparables à celles ressenties par le chirurgien en opération. Notamment la liberté de mouvement des instruments et les interactions de ces instruments avec le corps du patient ou d'autres dispositifs médicaux ne sont pas représentatives d'une situation réelle.

Un second inconvénient est que ce type de dispositifs est adapté uniquement pour s'entrainer à la réalisation d'un acte chirurgical bien précis. Cet inconvénient résulte fondamentalement du fait que, lorsque plusieurs ouvertures sont envisagées dans une surface d'un boitier appartenant à un tel dispositif, ces ouvertures sont agencées suivant des positions prédéterminées correspondant à des zones d'intervention spécifiquement liées à la pathologie concernée. Par conséquent, pour former le personnel médical à intervenir dans le cadre d'une autre pathologie, le boitier doit être remplacé, ce qui implique des manipulations additionnelles, souvent complexes, et coûteuses.

Il existe donc un besoin d'un dispositif d'entrainement pour réaliser un acte chirurgical imitant de manière optimisée les sensations perçues lors d'un réel acte chirurgical et permettant de simuler une pluralité d'actes chirurgicaux.

### RÉSUMÉ

La présente invention concerne un dispositif d'entrainement pour réaliser un acte chirurgical palliant les inconvénients de l'art antérieur.

L'invention concerne donc un dispositif d'entrainement pour réaliser un acte chirurgical. L'invention concerne également un système de guidage d'un acte chirurgical.

Selon un aspect, l'invention concerne un dispositif d'entrainement pour réaliser un acte chirurgical, caractérisé en ce qu'il comprend une enceinte comprenant au moins : une première surface définissant une interface d'opération destinée à recevoir au moins un outil chirurgical, le reste de la surface de l'enceinte formant une base ; une ouverture agencée sur ladite première surface ; et une interface de liaison maintenue à la circonférence de ladite ouverture ; ladite interface de liaison étant adaptée à recevoir et à maintenir un fourreau.

La présente invention permet avantageusement de reproduire des actes chirurgicaux, notamment des actes de chirurgie micro-invasive en imitant de manière optimisée les sensations perçues lors d'un réel acte chirurgical et en permettant de simuler une pluralité d'actes chirurgicaux.

Dans des modes particuliers de réalisation, le dispositif d'entrainement peut comporter en outre l'une ou plusieurs des caractéristiques suivantes, prises isolément ou selon toutes les combinaisons techniques possibles.

Dans un mode de réalisation, la première surface comporte une portion mobile par rapport à la base, ladite ouverture étant agencée sur ladite portion mobile. Une telle configuration de ladite première surface permet de modifier le placement de l'ouverture positionnée sur la partie mobile. Il s'agit donc d'une configuration particulièrement avantageuse puisqu'elle permet de reproduire de manière optimisée la position des incisions destinées à être pratiquées en lien avec l'acte chirurgical concerné. Ainsi, il est possible de s'entrainer sur une pluralité d'actes chirurgicaux avec le même dispositif, tout en reproduisant de manière optimisée les conditions réelles. La structure du dispositif d'entrainement avec portion mobile permet également de s'adapter à la morphologie de chaque patient.

Dans un mode de réalisation, la première surface comporte une autre ouverture agencée sur une autre portion de la première surface, distincte de ladite portion mobile. Une telle configuration de la première surface est avantageuse car elle permet d'augmenter le nombre de fourreaux, et donc in fine le nombre d'outils chirurgicaux susceptibles d'être introduits dans l'enceinte.

Dans un mode de réalisation, ladite autre portion est solidaire de la base. Ainsi, selon cette configuration, la modification de l'écart entre deux ouvertures résulte d'une modification de la position de la seule partie mobile. De telles dispositions permettent d'obtenir un dispositif de conception simple nécessitant peu de manipulations pour s'adapter à un acte chirurgical donné.

Dans un mode alternatif de réalisation, ladite autre portion est également mobile par rapport à la base. Ainsi, selon cette configuration, chaque ouverture est placée sur une partie mobile, les parties mobiles étant distinctes entre elles. De telles dispositions permettent d'augmenter les possibilités de modification d'écart entre deux ouvertures, notamment lorsque l'amplitude de mobilité de chaque portion mobile est réduite en raison d'un encombrement de l'environnement dans lequel est positionné le dispositif d'entrainement. L'adaptabilité du dispositif à différentes morphologies de patients est également améliorée.

Dans un mode de réalisation, le dispositif comporte au moins une glissière configurée pour coopérer avec au moins une portion mobile, de sorte à permettre un mouvement de translation de ladite au moins une portion mobile.

Dans un mode de réalisation, ladite interface de liaison comprend un élastomère, une mousse, un gel silicone ou une matière plastique. Dans un mode de réalisation, l'interface de liaison comprend au moins un élément dont le module de Young est compris entre 0,002 MPa et 50 MPa.

Dans un mode de réalisation, l'enceinte comprend au moins une interface de guidage agencée à proximité d'au moins une ouverture, ladite interface de guidage assurant une liaison rotule avec une partie longitudinal d'un fourreau.

Ces modes de réalisation permettent avantageusement de reproduire de manière optimisée les retours sensoriels ressentis lors d'une situation réelle en chirurgie, en particulier en chirurgie mini-invasive.

Dans un mode de réalisation, l'interface de liaison est l'interface de guidage. Dans un mode de réalisation, l'interface de liaison est amovible.

Dans un mode de réalisation, le dispositif d'entrainement comprend, en outre, un système de fixation dudit dispositif à un support ; et un moyen de réglage de la position dudit dispositif du système de fixation. Le dispositif est ainsi avantageusement configuré pour être adaptable à plusieurs utilisateurs et à être installé sur différents support.

Selon un autre aspect, l'invention concerne un système de guidage pour l'entrainement d'un acte chirurgical caractérisé en ce qu'il comporte : un dispositif d'entrainement selon la présente invention, un premier fourreau comportant une partie longitudinale et creuse introduite et maintenue dans l'une des ouvertures dudit dispositif et adaptée pour recevoir un outil chirurgical, ledit premier fourreau assurant une liaison pivot-glissant pour le déplacement dudit outil.

Dans un mode de réalisation, ledit système de guidage comprend, en outre, un second fourreau comportant une portion longitudinale et creuse introduite et maintenue dans une seconde ouverture dudit dispositif et adaptée pour recevoir un outil chirurgical, ledit second fourreau assurant une liaison pivot-glissant pour le déplacement dudit outil.

Dans un mode de réalisation, le au moins un fourreau comprend une couche de matériau élastique disposée sur la surface interne de la partie longitudinale dudit fourreau.

Dans un mode de réalisation, ledit système de guidage comprend, en outre, un outil chirurgical comportant une manette ; une tige destinée à être introduite dans l'une des ouvertures ou dans une interface de liaison du dispositif d'entrainement, une interface de commande ; au moins un capteur d'orientation et au moins un capteur de positionnement de l'outil chirurgical ; et au moins une interface de communication pour transmettre des données collectées par lesdits capteurs à un calculateur distant.

Dans un mode de réalisation, ledit système de guidage comprend, en outre, un capteur de l'activation de l'interface de commande ou un capteur d'une partie fonctionnelle dudit outil chirurgical générant un indicateur de commande, ledit capteur étant agencé sur l'outil chirurgical ; un générateur d'une image d'une zone d'un corps d'un patient sur un afficheur, ledit générateur comportant un calculateur pour déterminer d'une part la valeur de l'indicateur de commande et d'autre part des orientations et des positions d'images à afficher sur un afficheur en fonction des données reçues des capteurs agencés sur la manette ; et un afficheur vidéo affichant une reproduction d'une partie d'au moins un outil chirurgical et d'un mouvement relatif à son activation lorsque l'indicateur de commande est généré et affichant la zone d'un corps d'un patient.

Le système de guidage permet ainsi à l'utilisateur de voir une simulation de la partie d'un corps humain à opérer dans le monde virtuel ainsi qu'une représentation du déplacement et de l'activation des outils chirurgicaux qu'il manipule.

### BRÈVE DESCRIPTION DES FIGURES

L'invention sera mieux comprise à la lecture de la description suivante, donnée à titre d'exemple nullement limitatif, et faite en se référant aux figures suivantes :
**Figure 1A** est une vue du dispositif d'entrainement formant une enceinte close.
**Figure 1B** est une vue du dispositif d'entrainement formant une enceinte ouverte.
**Figure 2A** est une vue en coupe d'une ouverture.
**Figure 2B** est une vue en coupe d'une ouverture et d'une interface de liaison amovible.
**Figure 2C** est une vue en coupe d'une ouverture et d'une interface de liaison amovible comprenant une paroi intérieure rigide.
**Figure 3A** est une vue en coupe d'une ouverture dans laquelle est insérée un fourreau.
**Figure 3B** est une vue en coupe d'une ouverture et d'une interface de liaison amovible dans laquelle est insérée un fourreau.
**Figure 4** est une vue en coupe d'une ouverture et d'un fourreau dans lequel est inséré une tige d'un outil chirurgical.
**Figure 5** est une vue en coupe d'un dispositif d'entrainement. Un fourreau est inséré dans une ouverture du dispositif et la tige d'un outil chirurgical est inséré dans ledit fourreau.
**Figure 6** est une vue en coupe d'un fourreau comprenant une couche de matériau élastique.
**Figure 7** est une vue en coupe d'un dispositif d'entrainement comprenant deux ouvertures, un fourreau étant inséré dans chacune des ouvertures.
**Figure 8** et **Figure 9** est une vue en coupe d'un dispositif comprenant des moyens pour ajuster la distance entre deux ouvertures.
**Figure 10** est une vue de la première surface d'un dispositif d'entrainement comprenant une pluralité d'ouvertures.
**Figure 11** représente un exemple d'une image générée par le système de guidage.

Dans ces figures, des références identiques d'une figure à une autre désignent des éléments identiques ou analogues. Pour des raisons de clarté, les éléments représentés ne sont pas à l'échelle, sauf mention contraire.

### DESCRIPTION DÉTAILLÉE

L'invention concerne un dispositif d'entrainement, ainsi qu'un système de guidage comprenant ce dispositif d'entrainement. Dans un mode de réalisation, le dispositif est destiné à recevoir des outils chirurgicaux afin de simuler un acte chirurgical. Dans une mode de réalisation, ce dispositif chirurgical et / ou les outils chirurgicaux sont connectés à un processeur permettant de générer une réalité virtuelle interactive appelée aussi par la suite « monde virtuel ». Dans un mode de réalisation, cette réalité virtuelle interactive simule une partie du corps d'un patient ainsi que la position des outils chirurgicaux dans ladite partie du corps.

La présente invention vise à reproduire au niveau du dispositif d'entrainement les sensations ressenties par le chirurgien en situation réelle, en particulier les sensations extéroceptives.

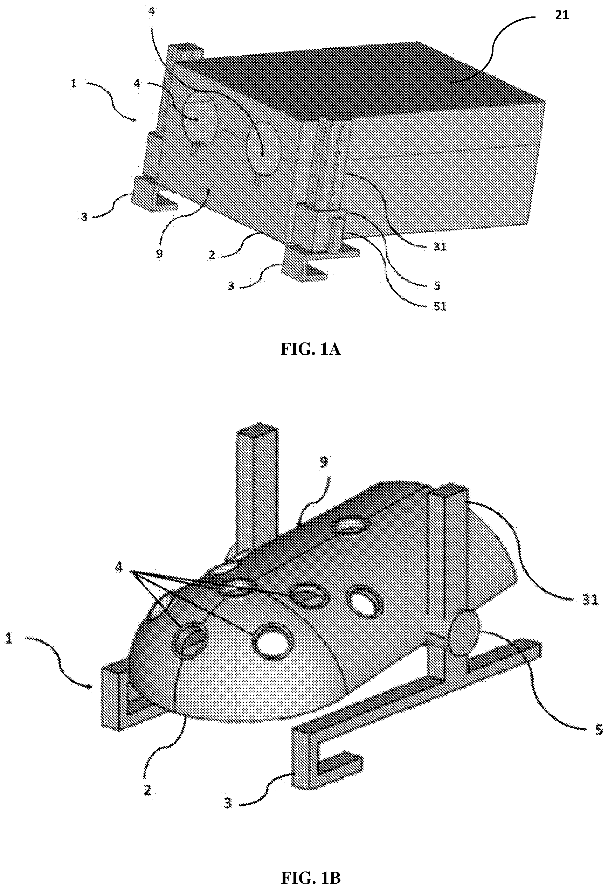

Par « un acte chirurgical », on entend la réalisation d'au moins une action chirurgicale sur un patient ou une pluralité d'actions chirurgicales. Dans un mode de réalisation, on entend également par « acte chirurgical » un ensemble d'étapes d'une procédure chirurgicale ou les étapes invasives ou micro-invasives d'une procédure chirurgicale depuis le début jusqu'à la fin d'une opération chirurgicale. Comme illustré **Fig. 1A**, le dispositif d'entrainement **1** comprend une enceinte **2**. Dans un mode de réalisation, l'enceinte **2** délimite un volume fermé.

Dans un mode de réalisation, l'enceinte **2** comprend au moins une première surface **9**, le reste de la surface de l'enceinte 2 formant une base 21. Cette première surface **9** définie une interface d'opération. Dans un mode de réalisation, cette première surface **9** comprend au moins une ou au moins deux ouvertures **4**. Cette interface d'opération est donc destinée à recevoir au moins un outil chirurgical par au moins l'une de ses ouvertures **4**.

Dans un mode de réalisation, illustré à titre nullement limitatif **Fig. 1A**, la première surface **9** est une surface plane. La base 21, quant à elle, est conformée de sorte que l'enceinte 2 présente une surface totale prenant la forme d'un parallélépipède rectangle.

Dans un mode de réalisation, ces ouvertures **4** permettent de simuler une incision du patient dans le monde virtuel. Dans un mode de réalisation, le dispositif d'entrainement **1** comprend des capteurs permettant d'enregistrer les positions, les mouvements et / ou l'états des commandes d'un outil chirurgical inséré dans une ouverture **4**.

Dans un mode de réalisation, ladite ouverture **4** est adaptée à recevoir et à maintenir un fourreau **7**. Le fourreau **7** permet de simuler la présence d'un trocart inséré dans une incision dans la peau d'un patient. Dans un mode de réalisation, ladite ouverture **4** comprend une interface de liaison **6** ou est configurée pour recevoir une interface de liaison **6** adaptée pour recevoir un fourreau **7**.

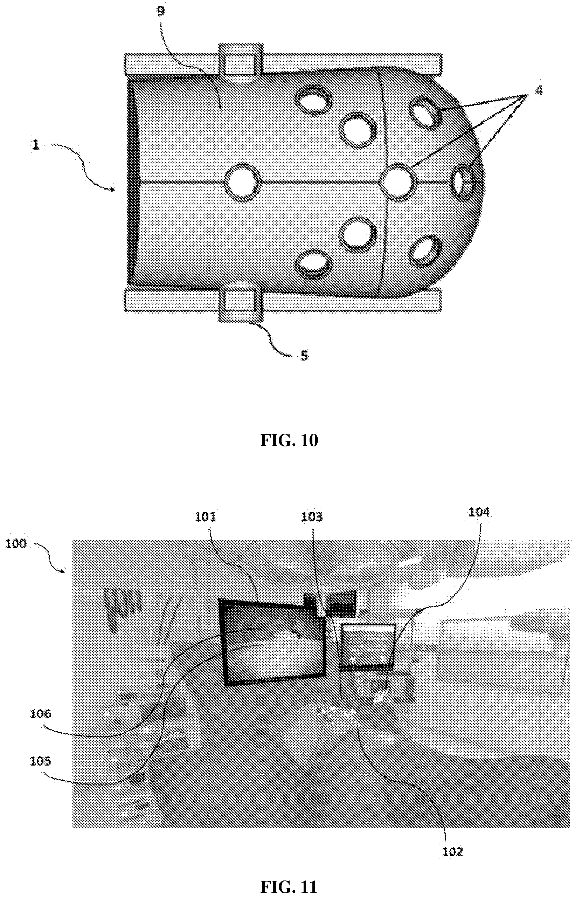

Dans un mode de réalisation illustré **Fig. 1B** et **Fig. 10**, la forme de l'enceinte **2** ou la forme de la première surface **9** correspond à la forme de l'abdomen d'un patient. Comme illustré **Fig. 1B**, l'enceinte **2** peut être formée par uniquement la première surface **9**.

Dans un mode de réalisation, la première surface **9** comprend au moins une portion présentant une courbe. Dans un mode de réalisation, les courbures de la première surface **9** sont prédéfinies pour correspondre aux courbures de l'abdomen d'un patient.

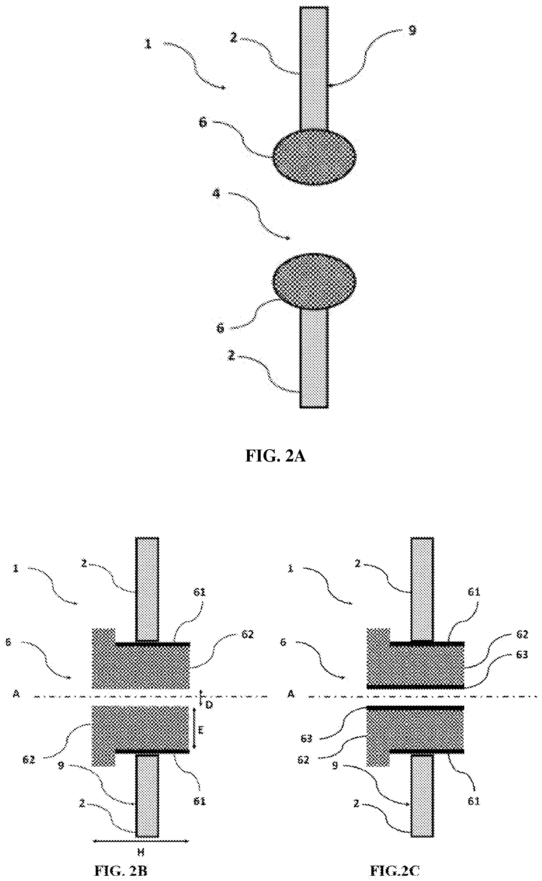

Comme illustré **Fig. 2A**, l'ouverture **4** est un espace libre entre les parois de l'enceinte **2**. Dans un mode de réalisation, le dispositif **1** comprend une interface de liaison **6** maintenue à la circonférence de ladite au moins une ouverture **4**. Dans un mode de réalisation, l'interface de liaison **6** présente un centre creux pour l'insertion d'un fourreau.

Dans un mode de réalisation, cette interface de liaison **6** comprend au moins un matériau souple. Dans un mode de réalisation, ce matériau souple est représentatif de la raideur ou de l'élasticité des tissus biologiques du patient de la zone d'insertion d'un fourreau dans le centre creux de l'interface de liaison **6**.

Dans un mode de réalisation illustré **Fig. 2B**, l'interface de liaison **6** est amovible et peut être retirée de l'ouverture **4**. Dans un mode de réalisation, l'ouverture **4** est de forme cylindrique. Dans un mode de réalisation, l'ouverture **4** et l'interface de liaison **6** comprennent un méplat (non représenté) pour faciliter l'insertion et / ou la mise en position de l'interface de liaison **6** dans l'ouverture **4**.

L'avantage du méplat est de stabiliser l'interface de liaison **6** dans l'ouverture **4**, en particulier quand ladite ouverture **4** est située sur une portion courbée de la première surface **9** ou sur une portion de la première surface présentant une inclinaison avec l'horizontale. La stabilisation de l'interface de liaison **6** dans l'ouverture **4** permet à la fois de ne pas parasiter le ressenti de l'utilisateur. Dans un second temps, la stabilisation de l'interface de liaison **6** permet également un parallélisme plus précis entre la position exacte de l'ouverture **4** et la position de cette ouverture **4** dans une représentation virtuelle.

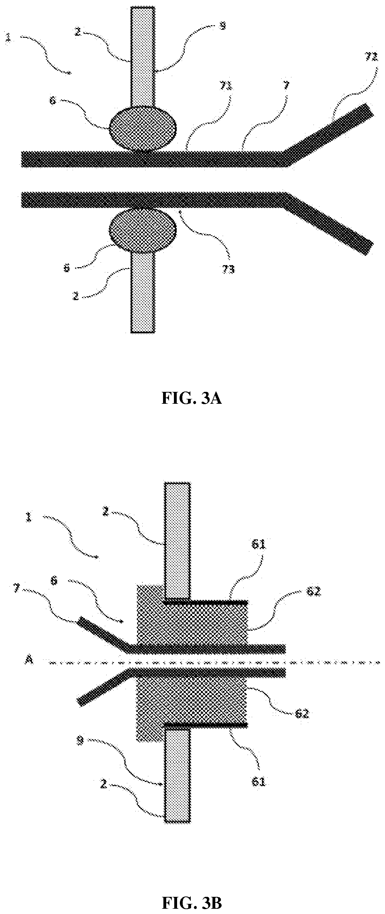

Dans un mode de réalisation illustré **Fig. 2B** et **Fig. 3B**, l'interface de liaison **6** comprend une paroi extérieure rigide **61**. Dans un mode de réalisation, cette paroi extérieure rigide **61** enveloppe le matériau souple **62**. La paroi extérieure rigide **61** permet l'insertion de l'interface de liaison **6** dans l'ouverture **4** de la première surface **9**.

Dans un mode de réalisation illustré **Fig. 2C**, l'interface de liaison **6** comprend également une paroi intérieure rigide **63**. Dans un mode de réalisation, le matériau souple **62** est agencé entre une paroi extérieure rigide **61** et une paroi intérieure rigide **63**. Dans un mode de réalisation, ces deux parois (**61**, **63**) définissent un cylindre creux.

L'avantage de cette paroi intérieure rigide **63** est de faciliter l'insertion du fourreau 7 dans l'interface de liaison **6**.

Cet avantage est accru lorsque le diamètre de la partie à insérer du fourreau **7** est supérieur au diamètre intérieur (**D**) de l'interface de liaison **6** la paroi intérieure rigide **63** quand le matériau souple est au repos. Dans ce cas de figure, la paroi intérieure rigide **63** permet de protéger le matériau souple **62** ou d'éviter le déchirement du matériau souple **62** lors de l'insertion du fourreau **7**.

Dans un mode de réalisation, la paroi intérieure rigide **63** couvre une partie de la circonférence du diamètre intérieur du matériau souple **62** de manière à autoriser l'agrandissement du diamètre intérieur (**D**) de l'interface de liaison **6** par compression du matériau souple **62**.

Dans un mode de réalisation, la hauteur (**H**) de l'interface de liaison **6** correspond sensiblement à la hauteur d'une paroi abdominale. Dans un mode de réalisation, la hauteur de l'interface de liaison **6** est comprise entre 1 cm et 15 cm. Une interface de liaison **6** comprenant une forte hauteur, par exemple entre 10 cm et 15 cm, permet par exemple de simuler une opération sur des personnes présentant une forte obésité.

Dans un mode de réalisation, le centre creux est cylindrique et présente un diamètre au repos (**D**) légèrement inférieur au diamètre externe de la partie du fourreau à insérer dans l'interface de liaison **6**. Par « diamètre au repos » on entend le diamètre lorsque le matériau souple est dans sa forme naturelle ou ne subit aucune contrainte.

Dans un mode de réalisation, le matériau souple **62** comprend un élastomère, un gel silicone, une mousse ou une matière plastique. Selon un exemple, ladite interface de liaison **6** comprend au moins une partie ayant un module de Young compris entre 0,002 et 50 MPa.

Dans un mode de réalisation, les propriétés élastiques du matériau souple sont similaires aux propriétés élastiques de la peau. Selon un exemple, ladite interface de liaison **6** comprend au moins une partie ayant un module de Young compris entre 0,002 et 15 MPa. Un tel intervalle permet donc de créer un ressenti, pour le personnel médical souhaitant se former, identique à celui obtenu lors d'actes chirurgicaux réels pratiqués au niveau de la peau. Cela permet donc de cibler très précisément le ressenti recherché, ce qui contribue à former le personnel médical de manière optimale pour l'acte chirurgical concerné. Autrement dit, viser un tel intervalle permet d'éviter de confondre les sensations liées à celle d'une pratique chirurgicale sur la peau avec d'autres sensations, comme par exemple celles liées à une pratique chirurgicale exercée dans des couches plus profondes du corps, typiquement les veines, les nerfs, les ligaments, etc. On comprend alors qu'avoir un matériau souple dans un tel intervalle réduit avantageusement les possibles erreurs de manipulations lors d'actes chirurgicaux exercés en conditions réelles sur des sujets.

Le choix d'un tel intervalle pour le module de Young de l'interface de liaison **6** ne constitue qu'une variante de réalisation de l'invention. Ainsi, rien n'exclut d'avoir un intervalle différent, de sorte que les propriétés élastiques du matériau souple **62** de l'interface de liaison **6** soient similaires aux propriétés élastiques d'une autre partie du corps, comme par exemple la paroi abdominale. Selon cet exemple, ladite interface de liaison **6** comprend au moins une partie ayant un module de Young compris entre 1 et 35 MPa.

L'avantage de cette interface de liaison **6** est de reproduire les interactions trocart / incision du patient. De cette manière, lors de la manipulation des instruments, l'utilisateur perçoit des retours sensoriels proches de ceux ressentis lors d'une situation réelle en chirurgie, en particulier en chirurgie mini-invasive.

Dans un mode de réalisation les propriétés élastiques du matériau souple **62** de l'interface de liaison **6** sont isotropes. Dans un mode de réalisation, le matériau souple présente une isotropie au moins supérieure à 90%. Avantageusement, ce matériau souple **62** isotrope permet de reproduire les propriétés élastiques de la peau.

Dans un mode de réalisation alternatif, les propriétés élastiques du matériau souple **62** de l'interface de liaison **6** sont anisotropes. Par exemple, le matériau souple **62** de l'interface de liaison **6** peut comprendre des fibres orientées dans une même direction créant un matériau dans lequel le module d'Young est plus important dans la direction parallèle que dans la direction perpendiculaire aux fibres. Les fibres peuvent constituer l'interface de liaison **6** ou être compris dans une matrice formant un matériau composite.

Avantageusement, ce matériau souple anisotrope **62** permet de reproduire une couche fibreuse de la peau. Ainsi, le dispositif selon la présente invention est capable de simuler une incision sur n'importe quelle partie du corps humain.

Dans un mode de réalisation, la au moins une ouverture **4** est conçue pour recevoir et à maintenir une interface de liaison **6**. Une fois maintenue, l'interface de liaison **6** est conçue pour recevoir et maintenir un fourreau **7**.

Dans un mode de réalisation, l'enceinte **2** comprend également au moins une interface de guidage. Dans un mode de réalisation, l'interface de guidage est agencée à proximité d'au moins une des ouvertures **4**.

Dans un mode de réalisation, cette interface de guidage assure une liaison rotule entre l'enceinte **2** et un outil chirurgical inséré dans ladite ouverture de l'enceinte **4**. Dans un mode de réalisation, l'interface de guidage assure une liaison rotule entre l'enceinte **2** et un fourreau **7** inséré dans ladite ouverture **4**.

Par « liaison rotule », on fait référence ici au fait que l'interface de guidage réalise une coopération entre l'enceinte **2** et un outil chirurgical/fourreau **7**, cette coopération présentant trois degrés de liberté en rotation.

Dans un mode de réalisation, illustré à titre nullement limitatif dans **Fig. 2A**, l'interface de liaison **6** est également l'interface de guidage. Dans ce mode de réalisation, l'interaction entre l'interface de liaison **6** et le fourreau **7** permet de reproduire de manière optimisée l'interaction entre un trocart et une incision réalisée sur le patient lors d'un acte chirurgical.

Avantageusement, cette liaison entre l'interface de liaison **6** et le fourreau **7** représente la liaison entre les tissus biologiques de la zone d'insertion du trocart et le trocart.

Tel qu'illustré dans l'exemple de la **Fig. 2A**, l'interface de liaison **6** présente une forme annulaire sensiblement cylindrique maintenue fixement avec le bord de l'ouverture **4**. Une telle configuration géométrique de l'interface de liaison **6** favorise la réalisation de la liaison rotule entre l'enceinte **2** et un outil chirurgical/fourreau **7** qui y est inséré. Il convient néanmoins de noter que le choix d'une forme particulière de l'interface de liaison **6** ne constitue qu'une variante de réalisation de l'invention. Ainsi, rien n'exclut, d'une part, d'avoir d'autres formes, et d'autre part, que certains degrés de liberté en rotation soient limités dans leurs amplitudes respectives, comme cela est par exemple décrit plus en détails ci-après en relation avec les réalisations illustrées dans les **Fig. 2B** et **Fig. 2C**.

Dans un mode de réalisation, l'interface de guidage assure une liaison entre l'enceinte **2** et la partie longitudinale d'un fourreau 7 ou d'un outil chirurgical **8**. Selon un exemple, ladite liaison comprend deux degrés de liberté en rotation. Selon cet exemple, un degré de liaison en rotation est défini selon l'axe longitudinal de la partie longitudinale **71** du fourreau **7**.

Dans un mode de réalisation, la partie longitudinale **71** du fourreau **7** comprend une surface extérieure comportant sur au moins une de ses portions un état de surface adapté à limiter le glissement avec l'interface de liaison **6**. Dans un mode de réalisation, la partie longitudinale **71** du fourreau **7** comprend une surface extérieure **73** comprenant un état de surface prédéfini pour limiter le glissement avec l'interface de liaison **6**. Dans un mode de réalisation, cet état de surface est adapté à bloquer le glissement en rotation sur son axe longitudinal du fourreau dans l'ouverture **4**.

Dans un mode de réalisation, cette interface de guidage permet au fourreau **7**, une fois inséré dans l'ouverture **4**, d'avoir 3 degrés de liberté en rotation. Dans la pratique, le fourreau **7** peut également conserver au moins un degré de liberté en translation correspondant à un déplacement d'insertion et de retrait. Dans un mode de réalisation, la partie évasée **72** du fourreau permet de bloquer la translation du fourreau lorsqu'il est enfoncé d'une distance prédéfinie. La partie évasée permet donc de limiter dans un sens ce degré de liberté en translation. Dans un mode de réalisation, la partie évasée permet également de faciliter l'introduction de l'outil chirurgical dans le fourreau **7**.

Dans un mode de réalisation, au moins deux degrés de liberté en rotation sont limités angulairement. Dans un mode de réalisation, les degrés de liberté en rotation selon les axes orthogonaux à l'axe central d'insertion **A** sont limités angulairement. En effet, l'inclinaison du fourreau **7** par rapport à la première surface **9** est limitée angulairement de manière à reproduire la liberté du trocart inséré dans une incision.

Dans un mode de réalisation, la liaison rotule du fourreau dans l'interface de guidage est limitée à une rotation de 90°, 45° ou préférentiellement de 30°.

Dans un mode de réalisation, le matériau souple **62** de l'interface de liaison autorise une rotation limitée d'un fourreau **7** selon les deux axes orthogonaux à l'axe centrale d'insertion **A** de l'interface de liaison **6**. Dans un mode de réalisation, le matériau souple **62** est capable de se compresser pour autoriser la rotation du fourreau. La limite angulaire des degrés de liberté en rotation est ainsi dictée par la limite de compressibilité du matériau souple **62**.

Dans un mode de réalisation, la rotation du fourreau **7** est limité par l'épaisseur (**E**) du matériau souple **62** et / ou par l'élasticité dudit matériau souple **62** de l'interface de liaison **6**. Dans un mode de réalisation, l'épaisseur (**E**) du matériau souple **62** varie entre 0,5 et 15 cm. L'épaisseur garanti les degrés de liberté.

L'épaisseur (**E**) du matériau souple **62**, son élasticité, et la hauteur (**H**) de l'interface de liaison **6** sont déterminées pour reproduire la résistance mécanique de la peau ou de la paroi abdominale.

L'avantage d'une interface de liaison amovible est donc de pouvoir, sur la même ouverture, modifier l'interface de liaison et donc la hauteur et les propriétés mécaniques de la liaison première surface **9** / fourreau **7.** Ainsi, le même dispositif **1** permet de multiplier les variantes d'utilisation : il permet non seulement de varier les parties du corps ou les types de paroi incisée mais également peut tenir compte de la variabilité des individus.

Comme illustré **Fig. 3A** et **Fig. 3B**, l'avantage de cette interface de liaison **6** est d'effectuer la liaison entre l'enceinte **2** et un fourreau **7**.

Dans une mode de réalisation, le fourreau **7** permet de simuler la présence d'un trocart. Dans un mode de réalisation, le fourreau **7** se présente sous la forme d'une tige cylindrique creuse. Dans un mode de réalisation, le fourreau **7** comprend une première partie longitudinale **71** configurée pour être insérée dans l'ouverture **4**. Dans un mode de réalisation, la première partie longitudinale **71** comprend un cylindre creux. Dans un mode de réalisation, la première partie longitudinale **71** comprend un diamètre extérieur et un diamètre intérieur. Dans un mode de réalisation, la première partie longitudinale **71** est destinée à recevoir au moins un outil chirurgical.

Dans un mode de réalisation, le fourreau **7** comprend une seconde partie évasée **72** dont le diamètre intérieur est plus grand que le diamètre intérieur de la première partie longitudinale **71**. Le fourreau est avantageusement configuré pour être inséré dans l'ouverture **4** par sa partie longitudinale **71** de manière à ce que la partie évasée **72** soit localisée à l'extérieur de l'enceinte **2**. Ainsi, cette partie évasée **72** est configurée pour introduire la partie longitudinale d'un outil chirurgical.

Dans un mode de réalisation, le fourreau **7** comprend un moyen pour régler le diamètre (non représenté) de sa partie longitudinale **71**. Ce moyen pour régler le diamètre de la partie longitudinale **71** du fourreau **7** permet de faire varier ce diamètre en fonction de l'outil chirurgical ou en fonction du diamètre de la tige de l'outil chirurgical utilisé pour l'entrainement.

Dans un mode de réalisation, le fourreau **7** est un trocart ou une reproduction d'un trocart tel que ceux utilisés lors d'opérations chirurgicales.

Dans un mode de réalisation illustré **Fig. 10**, la première surface **9** comprend un ensemble d'ouvertures **4** comprenant au moins deux ouvertures **4**. Dans un mode de réalisation, la première surface **9** comprend une pluralité d'ouvertures, par exemple 3, 4, 5, 6, 7, 8, 9 ou au moins 10 ouvertures **4**. Dans un mode de réalisation, les ouvertures **4** sont localisées sur la première surface **9** de manière à correspondre à la localisation des incisions réalisées en chirurgie micro-invasives de l'abdomen, par exemple en chirurgie viscérales ou bariatrique.

Suivant le type d'opération et la technique chirurgicale simulée, une partie de ces ouvertures **4** peuvent être utilisées. Dans un mode de réalisation non représenté, le dispositif comprend un nombre prédéfini de bouchons afin de boucher les ouvertures **4** qui ne seraient pas utilisées pendant l'entrainement.

Ainsi, le dispositif **1** permet l'entrainement à différent type d'actes chirurgicaux de par la position et l'orientation des ouvertures.

Dans un mode de réalisation, le dispositif **1** comprend des moyens de réglage du diamètre ou de la taille d'au moins une ouverture **4**. Ces moyens de réglage du diamètre ou de la taille des ouvertures permettent de faire varier la taille ou le diamètre des ouvertures. Par exemple, le dispositif **1** peut comprendre un diaphragme ou iris dont le centre correspond au centre de l'ouverture. Dans un mode de réalisation, ledit diaphragme ou ledit iris peut être relié à des moyens d'activation configurés pour provoquer la réduction ou l'agrandissement du diamètre de l'ouverture **4**.

De cette manière le diamètre ou la taille de l'ouverture **4** est variable et l'ouverture **4** peut ainsi être destinée à une large variété de diamètre de fourreau 7 et / ou à une large variété d'interfaces de liaison **6**. L'avantage est d'être capable, avec le même dispositif **1**, de s'entrainer sur différents types d'opération nécessitant dans la réalité des trocarts de tailles différentes.

Dans un mode de réalisation, le dispositif **1** comprend au moins deux ouvertures **4** de dimensions différentes. Cette disposition permet de simuler différentes opérations chirurgicales sur le même dispositif **1**. En effet, selon l'acte chirurgical simulé, les incisions peuvent être de différentes longueurs. Par exemples, les incisions réalisées via la paroi abdominale auront des dimensions supérieures à la même incision réalisée pour une opération vasculaire. L'invention permet de fournir un support réaliste à l'utilisateur afin qu'il s'exerce pour réaliser un acte.

Dans un mode de réalisation, le dispositif **1** comprend plusieurs ouvertures **4** parmi lesquelles, au moins deux ouvertures **4** comprennent des interfaces de liaison **6** différentes. Par « interface de liaison différentes », on entend des interfaces de liaisons **6** dont la hauteur, l'élasticité du matériau souple et / ou l'épaisseur du matériau souple différent les unes des autres. Ainsi, le dispositif **1** comprend plusieurs ouvertures **4** capables chacune de reproduire des incisions dans différentes parties du corps, par exemple une incision dans la peau ou une incision dans la paroi abdominale.

Le dispositif **1** est ainsi compatible pour la simulation de diverses opérations chirurgicales.

Dans un mode de réalisation, le dispositif **1** comprend, en outre, un système de fixation **3** dudit dispositif **1** à un support. Le système de fixation peut comprendre des moyens de serrage. Dans un mode de réalisation, le système de fixation **3** comprend une patte en forme de U pour coopérer avec un bord d'une table. Selon un premier exemple, le système de fixation **3** comprend un système de fixation par étau. Selon un second exemple, le système de fixation **3** est une ventouse.

Dans un mode de réalisation, le dispositif **1** comprend également des moyens de réglage de la position **5** du système de fixation **3** par rapport audit dispositif **1**.

Par exemple, le système de fixation **3** peut comprendre un élément longitudinal **31**. Dans un mode de réalisation, le dispositif **1** comprend un moyen de réglage de position **5** configuré pour glisser le long de l'élément longitudinal **31**. Comme illustré **Fig. 1A**, le moyen de réglage de position **5** comprend un élément amovible **51** destiné à être inséré dans des alésages de l'élément longitudinal **31** du système de fixation **3** de manière à fixer la position de l'enceinte **2** vis-vis du système de fixation **3**.

Plus précisément, le moyen de réglage de la position **5** comprend une partie solidaire de l'enceinte **2** autorisant une translation de l'enceinte le long de l'élément longitudinal **31** est un élément amovible.

Dans un mode de réalisation illustré **Fig. 1B**, le dispositif **1** comprend également un moyen de réglage de l'inclinaison de l'enceinte **2**. Le moyen de réglage de la position **5** est le moyen de réglage de l'inclinaison de l'enceinte **2**. Dans un mode de réalisation, le moyen de réglage de l'orientation autorise le réglage de l'inclinaison de l'enceinte **2** au niveau de la liaison avec l'élément longitudinal **31**.

Avantageusement, le moyen de réglage de la position **5**, permet de déplacer l'enceinte 2 de manière à ce que les ouvertures puissent correspondre à une position ergonomique pour l'utilisateur. Préférentiellement, l'utilisateur réglera la position de l'enceinte **2** de manière à ce que l'ouverture **4** soit sensiblement sur le même niveau vertical que les mains de l'utilisateur quand ses bras sont baissés ou dans une position non-fatigante.

Ainsi, le moyen de réglage de la position **5** est configuré pour être adapté pour plusieurs utilisateurs. De plus, le réglage de la position **5** permet la mobilité du dispositif qui peut être ainsi utilisé sur n'importe quel support.

Dans un mode de réalisation, l'enceinte **2** comprend un système de repérage de position et d'orientation.

Dans un mode de réalisation, l'enceinte **2** comprend un détecteur permettant d'identifier la présence d'une interface de liaison **6** dans une ouverture **4**. Le détecteur permet également d'identifier les paramètres de l'interface de liaison **6** comme par exemple, sa hauteur, l'élasticité du matériau souple **62** ou l'épaisseur du matériau souple **62**.

Dans un mode de réalisation où l'enceinte **2** délimite un volume fermé, l'enceinte **2** est remplie d'air. Dans un autre mode de réalisation, pour la simulation de certains actes chirurgicaux, l'enceinte **2** est remplie d'une matière, préférentiellement d'une matière molle ou visqueuse, ou d'un liquide.

La présence d'une matière visqueuse ou d'un liquide permet de simuler une résistance au mouvement de la au moins une tige **81** d'un outil chirurgical **8** se déplaçant dans l'enceinte **2**. Dans un mode de réalisation, la viscosité de la matière ou du liquide compris dans l'enceinte **2** est supérieure à 4·10⁻³ Pa.s. Dans un mode de réalisation, le module d'élasticité de la matière comprise dans l'enceinte **2** est supérieur à 0,002 MPa. Ces différentes viscoélasticités permettent de simuler un déplacement de l'outil chirurgical **8** dans le corps, par exemple dans un volume refermant du sang, dans un muscle ou encore un organe.

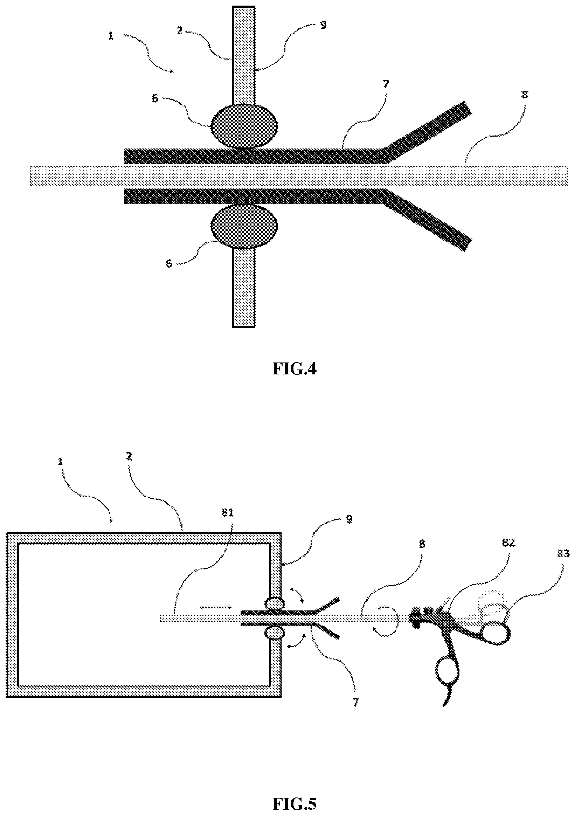

Dans un mode de réalisation illustré **Fig. 4**, et **Fig. 5**, le fourreau **7** est destiné à recevoir la tige **81** d'un outil chirurgical **8**.

Le fourreau **7** dont la portion longitudinale et creuse **71** est maintenue dans l'une des ouvertures **4** permet de recevoir un outil chirurgical **8**.

Par un « outil chirurgical » on entend ici tout outil chirurgical comprenant une portion longitudinale **81** (également appelé « tige » plus loin) configurée pour être insérée dans le corps d'un patient ainsi qu'une manette **82** destinée à être manipulée par le chirurgien pendant l'opération. On entend également par « outil chirurgical » toute reproduction d'un tel outil, comme par exemple, un outil reproduit par impression 3D.

Dans un mode de réalisation, « un outil chirurgical » englobe également un système d'imagerie pour enregistrer des images de l'intérieur du corps du patient pendant un acte chirurgical tel qu'une caméra endoscopique ou une caméra arthroscopique.

Dans un mode de réalisation, le fourreau **7** et la tige **81** de l'outil chirurgical **8** forment une liaison pivot-glissant. Dans un mode de réalisation illustré **Fig. 5**, la liaison formée par la tige **81** et le fourreau **7** ainsi que la liaison formée par le fourreau **7** et l'interface de guidage se combinent pour former, entre la tige **81** et l'enceinte **2**, une liaison comprenant 3 degrés de liberté en rotation et un degré de liberté en translation.

Dans un mode de réalisation, sur les trois degrés de liberté en rotation de la tige **81**, celui selon l'axe central d'insertion **A** ou selon l'axe longitudinal de la tige **81** est totalement libre. Dans un mode de réalisation, 1 ou 2 degrés de liberté en rotation sont limités angulairement de manière à reproduire la liberté de mouvement d'un outil chirurgical pendant une opération. Dans un mode de réalisation, les degrés de liberté en rotation limités angulairement sont les degrés de liberté en rotation selon les axes orthogonaux à l'axe central d'insertion **A**.

Dans un mode de réalisation, le diamètre interne de la partie longitudinale **71** du fourreau **7** est légèrement supérieur ou égal au diamètre externe de la tige **81** de l'outil chirurgical **8**.

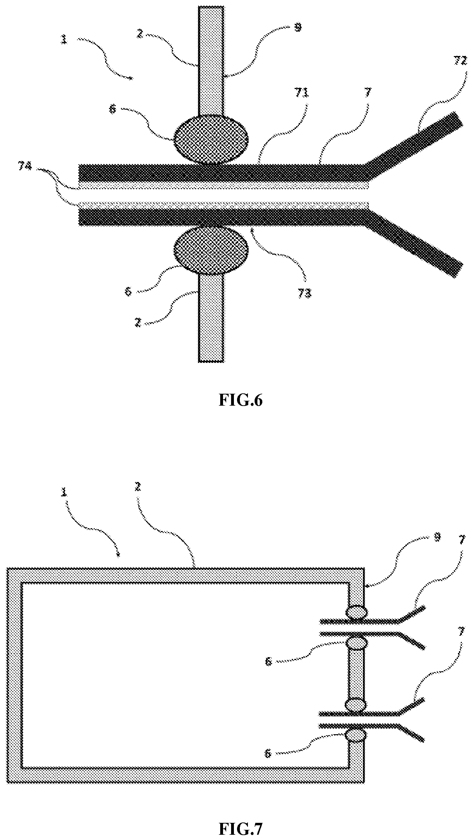

Dans un mode de réalisation illustré **Fig. 7**, l'enceinte **2** comprend au moins 2 ouvertures **4** agencées sur la première surface **9**. Dans un mode de réalisation, les au moins deux ouvertures **4** comprennent chacune une interface de liaison **6**. Dans un mode de réalisation, les au moins deux ouvertures **4** sont adaptées à recevoir chacune un fourreau **7**.

La suite de la description vise à détailler un mode de réalisation de l'invention, dans lequel la première surface **9** comporte une portion mobile **10** par rapport à la base **21**, l'ouverture **4** étant agencée sur ladite portion mobile **10**. Une telle configuration de ladite première surface **9** permet de modifier le placement de l'ouverture **4** positionnée sur la partie mobile **10** par rapport à la base **21**. De cette manière, il est possible de reproduire de manière optimisée la position d'incisions destinées à être pratiquées en lien avec l'acte chirurgical concerné. Ainsi, il est possible de s'entrainer sur une pluralité d'actes chirurgicaux avec le même dispositif **1**, tout en reproduisant de manière optimisée les conditions réelles au moyen de l'interface de liaison **6**. Il est également possible d'adapter le dispositif **1** à la morphologie de chaque patient.

Par «mobile », on fait référence ici à un mouvement relatif par rapport à la base **21** considérée comme étant fixe, de sorte à modifier la distance entre ladite base **21** et ladite portion mobile **10**. Ainsi, une portion mobile **10** de la première surface **9** correspond à un élément de surface apte à être déplacé, par un utilisateur ou bien des moyens automatisés connus en soi, entre une première position, dite position de départ, et une seconde position, dite position d'arrivée. Il apparaitra de manière implicite à l'homme de l'art, eu égard à la nature de l'invention, que ces positions respectivement de départ et d'arrivée correspondent à des positions stables, c'est-à-dire des positions dans lesquelles la portion mobile **10** est maintenue. Autrement dit, le dispositif **1** est pourvu de moyens de blocage en position stable de la portion mobile **10**. De manière générale, tout moyen de blocage connu de l'homme de l'art peut être mis en œuvre (frein, butée, etc.), le choix d'un moyen de blocage ne constituant qu'une variante de réalisation de l'invention.

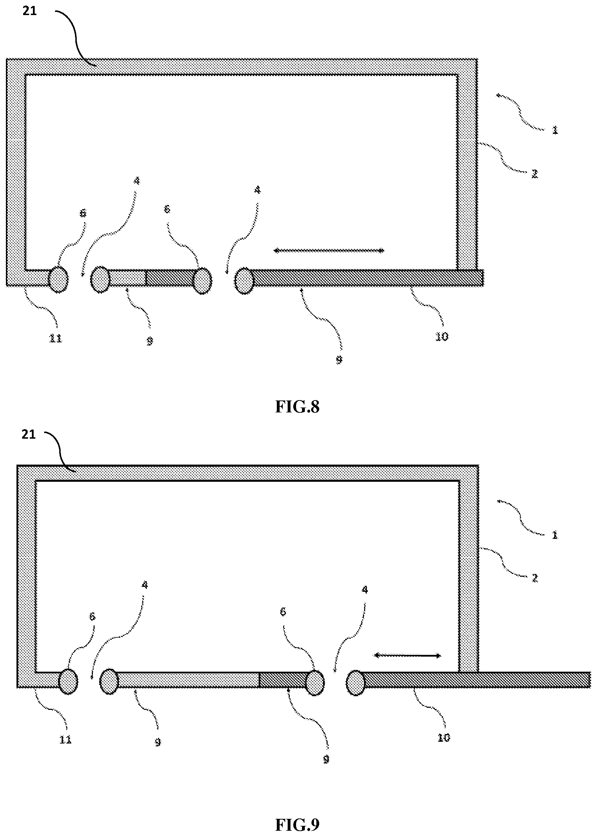

Les figures **Fig.8** et **Fig.9** illustrent de manière schématique des exemples préférés de réalisation de l'enceinte **2**, dans lesquels deux ouvertures sont pratiquées dans la première surface **9**, cette dernière étant configurée de sorte que l'écart entre lesdites deux ouvertures est ajustable en fonction de l'acte chirurgical sur lequel un membre du personnel médical souhaite s'exercer.

Tel qu'illustré **Fig. 8** et **Fig. 9**, la première surface **9** comporte une autre ouverture **4** agencée sur une autre portion de la première surface **9**, distincte de ladite portion mobile **10**. Lesdites ouvertures **4** sont adaptées à recevoir et à maintenir un fourreau 7 tel que décrit précédemment.

Une telle configuration de ladite première surface **9** permet de modifier le placement des deux ouvertures **4**, l'une par rapport à l'autre, donc de faire varier l'écart qui les sépare. Il est ainsi possible de reproduire de manière optimisée la position d'une pluralité d'incisions destinées à être pratiquées en lien avec l'acte chirurgical concerné. De cette manière, le personnel médical qui souhaite se former est en mesure de s'exercer sur une pluralité d'actes chirurgicaux avec un seul et même dispositif, tout en reproduisant de manière optimisée les conditions réelles.

Dans les exemples illustrés **Fig. 8** et **Fig. 9**, ladite autre portion **11** est solidaire de la base **21**. Par « solidaire », on fait référence ici au fait que cette autre portion **11** reste fixe par rapport à la base **21**. Dans cet exemple de réalisation, ladite portion solidaire **11** est formée par un prolongement de la base **21**, ce prolongement venant de matière avec ladite base **21**. Ainsi, selon cette configuration, la modification de l'écart entre deux ouvertures **4** résulte d'une modification de position de la seule portion mobile **10**, l'autre portion restant fixe par rapport à la base **21**. De telles dispositions permettent d'obtenir un dispositif **1** de conception simple nécessitant peu de manipulations pour s'adapter à un acte chirurgical donné.

Il est à noter que rien n'exclut d'avoir une portion **11** solidaire avec la base **21** sans pour autant venir de matière avec celle-ci. D'une manière générale, tout moyen de maintien en position fixe de l'autre portion **11** est envisageable, le choix d'un moyen de maintien ne constituant qu'une variante de réalisation de l'invention. L'homme de l'art saura choisir un tel moyen de maintien (soudage, collage, etc.), cet aspect de l'invention n'étant dès lors pas détaillé plus avant.

Dans un mode alternatif de réalisation (non représenté sur les figures), ladite autre portion **11** est également mobile par rapport à la base **21**. Ainsi, selon cette configuration, chaque ouverture **4** est placée sur une portion mobile, les portions mobiles étant distinctes entre elles. De telles dispositions permettent d'augmenter les possibilités de modification d'écart entre deux ouvertures **4**. En effet, il arrive que le dispositif **1** soit implanté dans un environnement encombré, que ce soit par du personnel d'assistance stationnant à proximité immédiate dudit dispositif **1** ou bien encore par d'autres équipements nécessaires à l'acte chirurgical concerné. On comprend alors que dans ce type d'environnement, l'amplitude des déplacements d'une portion mobile **10** peut être limitée, si bien que disposer de deux portions mobiles est très avantageux pour compenser l'amplitude réduite de chacune desdites portions mobiles. Cela contribue également à l'adaptabilité du dispositif **1** à différentes morphologies de patients.

Dans les exemples de réalisation illustrés **Fig. 8** et **Fig. 9**, la portion mobile **10** est apte à être déplacée suivant un mouvement de translation. A cet effet, le dispositif comporte une glissière (non représentée sur les figures) configurée de manière connue en soi pour coopérer avec ladite portion mobile **10**. L'utilisation d'une telle glissière permet d'assurer un mouvement de translation stable dans un plan parallèle à celui dans lequel s'étend la première surface **9**. Il apparaitra de manière évidente à l'homme de l'art que l'invention ne se limite pas à la mise en œuvre d'une seule glissière. Par exemple, afin d'accroitre encore la stabilité du mouvement de translation, le dispositif 1 peut comprendre deux glissières agencées en regard l'une de l'autre et configurées pour coopérer avec deux côtés opposés de la portion mobile **10**.

En outre, dans le cas où la première surface **9** comporte deux portions mobiles, rien n'exclut que chaque portion mobile coopère avec une ou plusieurs glissières qui lui sont spécifiquement dédiées, ou bien encore que les deux portions mobiles coopèrent avec des glissières communes.

Il est à noter que l'invention ne saurait être réduite à un mode de déplacement d'un type particulier pour une portion mobile **10**, comme par exemple un mouvement de translation tel que décrit ci-dessus. Ainsi, rien n'exclut par exemple d'avoir une portion mobile **10** suivant un mouvement sensiblement en arc de cercle au moyen d'un bras de levier configuré à cet effet (par exemple un bras de levier dont une extrémité est mobile en rotation et une autre extrémité opposée est coopère fixement avec une portion mobile), ou bien encore d'avoir une portion mobile **10** en rotation au moyen d'une ou plusieurs charnières. Rien n'exclut non plus que lorsque la première surface **9** comporte plusieurs portions mobiles, les mouvements respectifs desdites portions mobiles diffèrent entre eux.

Par ailleurs, l'invention a été décrite jusqu'à présent avec au plus deux portions mobiles. Il n'en reste pas moins que le nombre de portions mobiles ne saurait être limité à deux au plus. Plus particulièrement, le nombre de portions mobiles est au plus égal au nombre d'ouvertures **4** pratiquées dans la première surface **9**. Or le nombre maximal d'ouvertures **4** est adapté en fonction de la gamme d'actes chirurgicaux sur lesquels peut se former le personnel médical pour un même dispositif **1**. A titre d'exemple nullement limitatif, le nombre d'ouvertures est égal à 5, et le nombre de portions mobile est compris entre 0 et 5, par exemple égal à 2.

Selon un autre aspect, l'invention consiste en un système de guidage pour l'entrainement d'un acte chirurgical. Dans un mode de réalisation, ledit système comprend un dispositif d'entrainement **1**, au moins un premier fourreau **7** comprenant une portion longitudinale **71** et creuse introduite et maintenue dans l'une des ouvertures **4** dudit dispositif d'entrainement **1**. Dans un mode de réalisation, le fourreau **7** est adapté pour recevoir une tige **81** d'un outil chirurgical **8**. Dans un mode de réalisation, ledit premier fourreau 7 assure une liaison pivot-glissant pour le déplacement dudit outil chirurgical **8**. Dans un mode de réalisation, le système chirurgical comprend un deuxième fourreau **7** introduit et maintenu dans l'une des ouvertures du dispositif d'entrainement **1**.

Dans un mode de réalisation, le système de guidage comprend également au moins un outil chirurgical **8** tel que décrit ci-dessus.

Dans un mode de réalisation alternatif illustré **Fig. 6**, la partie longitudinale **71** du fourreau **7** comprend également une couche de matériau élastique **74**. Cette couche de matériau élastique **74** est configurée pour être déformée par un objet situé dans la portion creuse centrale de la partie longitudinale **71** du fourreau **7**.

Dans un mode de réalisation, cette couche de matériau élastique **74** est disposée sur la surface interne de la partie longitudinale **71** du fourreau **7**. Dans un mode de réalisation, cette couche **74** est fixée à la surface interne du fourreau **7**. La fixation peut s'effectuer par collage ou par thermocollage.

Dans ce mode de réalisation, cette couche de matériau élastique **74** est configurée pour être déformée en compression au passage d'une tige **81**. Dans un mode de réalisation, le diamètre externe de la tige **81** est supérieur au diamètre interne de la partie longitudinale **71** du fourreau **7**. Dans un mode de réalisation, une fois la tige **81** insérée dans le fourreau **7**, la couche de matériau élastique **74** va tendre à revenir à sa forme d'origine, rendant ainsi nulle la différence entre le diamètre interne du fourreau **7** et le diamètre externe de la tige **81**.

Dans un mode de réalisation, le diamètre interne de la partie longitudinale **71** du fourreau 7 varie entre un premier diamètre où la couche de matériau élastique **74** est dans sa forme « au repos » et un second diamètre où la couche de matériau élastique **74** est compressée au maximum de son élasticité. Dans un mode de réalisation, le diamètre externe de la tige est compris entre ledit premier diamètre et ledit second diamètre.

De cette manière, on évite avantageusement l'apparition d'un jeu entre la tige **81** et les parois du fourreau **7**. En outre, cela permet également d'utiliser des outils chirurgicaux **8** comprenant des tiges **81** de différents diamètres sur le même fourreau **7**. Cette dernière possibilité permet d'obtenir des configurations optimisées relatives à des situations diverses d'actes opératoires. Ainsi, le même fourreau **7** peut être utilisé pour l'entrainement et la simulation d'utilisation de différents outils chirurgicaux et donc pour la simulation de différents actes chirurgicaux.

Dans un mode de réalisation alternatif non représenté, la couche de matériau élastique **74** comprend une première portion à la première extrémité longitudinale de la partie longitudinale **71** du fourreau **7** et une seconde portion localisée à la seconde extrémité longitudinale de la partie longitudinale **71** du fourreau **7**. Ce mode permet de réduire la quantité de matériau utilisé et d'alléger le fourreau.

Dans un mode de réalisation, la première portion et la deuxième portion présentent une section dont la géométrie est non-circulaire de manière à faciliter la déformation de la couche de matériau élastique **74** au passage de la tige **82**. Dans un mode de réalisation, la première portion et la deuxième portion présentent chacune une section en étoile.

Dans un mode de réalisation, cette couche de matériau élastique **74** comprend une surface suffisamment lisse pour assurer une liaison pivot-glissant avec une tige insérée dans le fourreau **7**.

Dans un mode de réalisation, la manette **82** de l'outil chirurgical **8** comprend au moins une interface de commande **83**. Cette interface de commande peut être un interrupteur, un bouton poussoir, un ciseau ou tout moyen d'actionnement.

Lors d'une véritable intervention, cette interface de commande permet d'actionner une fonction à l'extrémité distale de l'outil chirurgical, par exemple d'actionner une pince. Dans un mode de réalisation, cette interface de commande **83** va permettre de reproduire dans le monde virtuel une activation de l'extrémité distale de l'outil chirurgical et de reproduire également l'état de l'interface de commande **83**.

Dans un mode de réalisation, l'outil chirurgical **8** comprend au moins un capteur de l'activation de l'interface de commande **83**. Dans un mode de réalisation, ledit capteur de l'activation de l'interface de commande **83** génère un indicateur de commande.

Dans un mode de réalisation non représenté, la tige **82** comprend une partie fonctionnelle activable par l'interface de commande **83**. Dans un mode de réalisation, l'outil chirurgical **8** comprend un capteur de l'actionnement de la partie fonctionnelle. Selon un exemple non limitatif, la partie fonctionnelle est une pince actionnable via l'interface de commande **83** et le capteur de l'actionnement mesure l'angle d'ouverture de la pince ou la distance entre deux mâchoires de ladite pince. Dans un mode de réalisation ledit capteur de l'actionnement génère un indicateur de commande.

Dans un mode de réalisation, la partie fonctionnelle est localisée à proximité ou sur l'extrémité distale de la tige **82**.

L'indicateur de commande peut donc être généré soit à partir de l'interface de commande **83** soit par la position ou l'état de la partie fonctionnelle de l'outil chirurgical **8**.

Comme illustré **Fig. 5**, l'interface de commande **83** peut être une partie mobile configurée pour être déplacée simplement par l'utilisateur, par exemple à partir d'un doigt de l'utilisateur. Dans un mode de réalisation, le capteur de l'activation de l'interface de commande **83** génère un indicateur qui peut être le pourcentage de déplacement ou un déplacement par rapport à une référence.

Ainsi, l'utilisateur s'entraine sur une manette **82** similaire à celle utilisée lors d'une réelle opération chirurgicale. De plus, ce capteur peut permettre lors d'une simulation, de générer une image sur laquelle est simulée l'activation de la partie fonctionnelle de la tige lorsque l'utilisateur active l'interface de commande **83**, par exemple d'ouvrir ou de fermer une pince proportionnellement à la valeur de l'indicateur généré.

Dans un mode de réalisation, l'outil chirurgical **8** comprend au moins un capteur de position. Dans un mode de réalisation, l'outil chirurgical **8** comprend au moins un capteur de positionnement et / ou au moins un capteur d'orientation.

Dans un mode de réalisation, l'outil chirurgical **8** comprend au moins une interface de communication pour transmettre les données collectées par les capteurs de l'outil chirurgical **8** à un calculateur distant. Dans un mode de réalisation, cette interface de communication peut être sans fils ou filaire. Dans un mode de réalisation, cette interface de communication permet également de transmettre les données du au moins un capteur de l'activation de l'interface de commande **83** ou du au moins un capteur de l'actionnement de la partie fonctionnelle de l'outil chirurgical **8**.

Dans un mode de réalisation, l'outil chirurgical **8** comprend au moins un moyen de retour haptique. Dans un mode de réalisation, ce moyen de retour haptique est un vibreur ou un transducteur. Ce moyen de retour haptique permet, lorsqu'une simulation détecte un contact entre l'outil chirurgical et un objet simulé dans le monde virtuel, de faire ressentir à l'utilisateur ce contact.

Dans un mode de réalisation, le système de guidage comprend également des moyens de simulations d'un acte chirurgical dans un monde virtuel. Dans un mode de réalisation un dispositif d'affichage génère en temps réel une simulation d'un acte chirurgical comprenant une partie d'un corps d'un patient et la simulation d'au moins une tige d'un outil chirurgical manipulé par un utilisateur.

À travers le dispositif d'affichage, l'utilisateur voit une simulation de la partie d'un corps humain à opérer dans le monde virtuel ainsi qu'une représentation du déplacement des outils chirurgicaux qu'il manipule.

Dans un mode de réalisation, le calculateur est configuré pour simuler une interaction entre le au moins outil chirurgical et le corps du patient. Dans un mode de réalisation le calculateur est configuré pour transmettre des informations au moyen de retour haptique de l'outil chirurgical **8**. Dans un mode de réalisation, le calculateur est configuré pour transmettre des informations ou activer les moyens de retour haptique pour faire ressentir à l'utilisateur un événement, par exemple, quand l'outil chirurgical touche le corps du patient dans le monde virtuel.

Dans un mode de réalisation, le système de guidage comprend un générateur d'une image d'une zone d'un corps d'un patient sur un afficheur. Dans un mode de réalisation, le générateur comprend un calculateur permettant de réceptionner les données transmises par les capteurs de l'outil chirurgical et / ou par l'interface de commande. Dans un mode de réalisation, le générateur comprend un calculateur permettant de réceptionner les données transmises par l'outil chirurgical et de transmettre des informations audit outil chirurgical **8**.

Dans un mode de réalisation, le calculateur est configuré pour :
- déterminer la valeur de l'indicateur de commande ; et / ou
- déterminer des positions et des orientations d'outils chirurgicaux à afficher sur un afficheur à partir des données reçues par les capteurs agencés sur l'outil chirurgical.

Dans un mode de réalisation, le générateur, à partir des données reçues desdits capteurs de l'outil chirurgical **8**, génère une première image comprenant une représentation visuelle d'au moins un outil chirurgical. La représentation visuelle de ce dernier outil peut, par exemple, être superposée à la représentation d'une zone d'un corps ou à celle d'un organe et de son environnement.

Dans un mode de réalisation, la position de l'outil chirurgical est calculée en temps réel. Ainsi, la première image générée permet de simuler la position de la partie distale de l'outil chirurgical dans le corps d'un patient virtuel. Dans un mode réalisation, la première image générée comprend la partie fonctionnelle de l'outil chirurgical ainsi que son état d'activation.

Cette première image simule avantageusement, une image prise par une caméra introduite dans le corps du patient pendant l'opération et affichée sur un écran en salle d'opération pour guider les mouvements du chirurgien.

Dans un mode de réalisation, l'image générée est transmise à un afficheur vidéo.

Dans un mode de réalisation, le générateur génère une seconde image. Dans un mode de réalisation, cette seconde image générée comprend la première image générée. Dans un mode de réalisation, la seconde image générée est une simulation de la vue du chirurgien pendant une opération. Selon un exemple, cette simulation de la vue du chirurgien comprend un écran comprenant la première image générée.

Dans un mode de réalisation, la seconde image générée comprend une représentation visuelle d'au moins un outil chirurgical manipulé par l'utilisateur. Dans un mode de réalisation, le au moins un outil chirurgical **8** est représenté à l'identique dans le monde virtuel. Dans un mode de réalisation, l'outil chirurgical est représenté à l'identique dans la représentation visuelle de la seconde image générée. Dans un mode de réalisation, la position, l'orientation de l'outil chirurgical **8** sont représentés dans la seconde image générée. Dans un mode de réalisation, l'état ou l'agencement de l'interface de commande **83** est représenté dans la seconde image généré.

Ainsi, l'utilisateur peut avantageusement regarder dans la seconde image générée la position de son outil par rapport au corps du patient et si l'interface de commande a été activée ou non. Dans un mode de réalisation, la seconde image comprend un abdomen du patient. Dans un mode de réalisation, le générateur est connecté au système de repérage de position et d'orientation de l'enceinte **2**. Dans un mode de réalisation, la seconde image est générée à partir des données reçues par ledit système de repérage. Ainsi, la position et l'orientation de l'enceinte **2** est reproduite dans le monde virtuel pour simuler, par exemple l'abdomen du patient. De plus, la seconde image générée peut comprendre des trocarts insérés dans des incisions du patient. Les trocarts représentés correspondants aux fourreaux **7** du système de guidage.

Dans un mode de réalisation, la forme de l'abdomen de la seconde image correspond à la forme de l'enceinte **2** ou correspond à la forme de la première surface **9**.

Dans un mode de réalisation, la seconde image générée comprend le patient.

Dans un mode de réalisation, le calculateur est configuré pour interpréter les données provenant des capteurs de la manette de l'outil chirurgical pour déterminer la position et l'orientation dudit outil chirurgical dans l'espace et / ou l'activation de sa partie fonctionnelle et / ou de sa manette.

Dans un mode de réalisation, le système de guidage comprend donc un afficheur vidéo affichant une reproduction d'une partie d'au moins un outil chirurgical et d'un mouvement relatif à son activation lorsque l'indicateur de commande est généré.

Dans un mode de réalisation, l'afficheur vidéo est configuré pour afficher la première image générée par le générateur ou la seconde image générée par le générateur.

Dans un mode de réalisation, l'afficheur vidéo affiche également une reproduction d'une zone d'un corps d'un patient.

Dans un mode de réalisation, l'afficheur vidéo est un écran.

Dans un mode de réalisation, l'afficheur vidéo est un casque de réalité virtuelle.

Dans un mode de réalisation illustré **Fig. 11**, la seconde image générée **100** comprend la représentation de la zone du patient à opérée **102**, au moins un trocart **103** insérée dans une incision du patient, au moins un outil chirurgical **104** inséré dans ledit trocart **103**.

La seconde image générée comprend également la première image générée **101**. Dans un mode de réalisation, cette première image **101** est représentée dans la seconde image **100** dans un écran. Cette première image générée comprend au moins une zone d'un corps d'un patient **105** (ici un organe) et son environnement. La première image générée comprend également au moins une partie de l'outil chirurgical (ici l'extrémité distale de l'outil chirurgical) **106** et / ou sa partie fonctionnelle (ici une pince) activable par l'interface de commande **83** de l'outil chirurgical **8**.

Selon un autre aspect, l'invention concerne un système destiné à former des personnes à exécuter une procédure chirurgicale à caractère mini-invasif ; comprenant :
- un dispositif d'entrainement selon la présente invention ;
- au moins un fourreau et au moins un outil chirurgical selon la présente invention ;
- un moyen d'affichage vidéo ;
- un système d'imagerie vidéo destiné à produire une simulation d'image vidéo dudit outil du dispositif superposé sur une représentation visuelle d'un organe du patient et de son environnement ;
- un processeur configuré pour interpréter les données provenant des capteurs de la manette du dudit dispositif pour déterminer la position et l'orientation de l'instrument ; ledit processeur contrôlant également le système d'imagerie vidéo pour créer une simulation visuelle pour ledit moyen d'affichage.

De manière plus générale, il est à noter que les modes de réalisation considérés ci-dessus ont été décrits à titre d'exemples non limitatifs, et que d'autres variantes sont par conséquent envisageables.

Notamment, l'invention a été décrite en considérant un système destiné à former des personnes, ce système étant notamment équipé d'un système d'imagerie vidéo favorisant l'assistance visuelle de la personne exerçant les manipulations. Rien n'exclut, suivant d'autres exemples, de considérer un système destiné à la formation dans lequel le dispositif d'entrainement comporte une première surface réalisée dans un matériau transparent, voire même en ce que l'enceinte toute entière soit réalisée dans un tel matériau transparent. Dans de tels cas, le matériau transparent forme également une aide à l'assistance visuelle dans la mesure où la personne exerçant les manipulations acquiert une perception visuelle directe de ses mouvements. Bien entendu, l'utilisation d'un tel matériau transparent est compatible avec un système d'imagerie vidéo de sorte à avoir une assistance visuelle optimale.

### RÉFÉRENCES

1 - Dispositif d'entrainement
2 - Enceinte
21 - Base
3 - Système de fixation
31 - Élément longitudinal
4 - Ouvertures
5 - Moyen de réglage de la position
51 - Élément amovible
6 - Interface de liaison
61 - Paroi extérieure rigide
62 - Matériau souple
63 - Paroi intérieure rigide
7 - Fourreau
71 - Partie longitudinale
72 - Partie évasée
73 - Surface extérieure du fourreau
74 - Couche de matériau élastique du fourreau
8 - Outil chirurgical
81 - Tige
82 - Manette
83 - Interface de commande
9 - Première surface
10 - Portion mobile de la première surface
11 - Portion solidaire de la première surface
A - Axe central d'insertion
100 - Seconde image générée
101 - Première image générée affichée sur un écran
102 - Abdomen d'un patient
103 - Trocart inséré dans une incision du patient
104 - Outil chirurgical inséré dans un trocart
105 - Organe du patient
106 - Outil chirurgical

## Revendications

1. Dispositif d'entrainement (1) pour réaliser un acte chirurgical, ledit dispositif (1) comprenant une enceinte (2) comportant :
- une première surface (9) définissant une interface d'opération destinée à recevoir au moins un outil chirurgical (8), le reste de la surface de l'enceinte (2) formant une base (21) ;
- une ouverture (4) agencée sur ladite première surface (9) ;
- une interface de liaison (6) maintenue à la circonférence de ladite ouverture (4) ; ladite interface de liaison (6) étant adaptée à recevoir et à maintenir un fourreau (7) ;
ledit dispositif (1) étant **caractérisé en ce que** la première surface (9) comporte une portion mobile (10) par rapport à la base (21), ladite ouverture (4) étant agencée sur ladite portion mobile (10).

2. Dispositif (1) selon la revendication **1**, **caractérisé en ce que** la première surface (9) comporte une autre ouverture (4) agencée sur une autre portion de la première surface (9), distincte de ladite portion mobile (10).

3. Dispositif (1) selon la revendication **2**, **caractérisé en ce que** ladite autre portion est solidaire (11) de la base (21).

4. Dispositif (1) selon la revendication **2**, **caractérisé en ce que** ladite autre portion est également mobile (10) par rapport à la base (21).

5. Dispositif (1) selon l'une des revendication **1** à **4**, **caractérisé en ce qu'**il comporte au moins une glissière configurée pour coopérer avec au moins une portion mobile (10), de sorte à permettre un mouvement de translation de ladite au moins une portion mobile (10).

6. Dispositif (1) selon la revendication **1**, **caractérisé en ce que** ladite interface de liaison (6) comprend un élastomère, une mousse, un gel silicone ou une matière plastique dont le module de Young est compris entre 0,002 MPa et 50 MPa.

7. Dispositif (1) selon l'une des revendications **1** à **6**, **caractérisé en ce que** l'enceinte (2) comprend au moins une interface de guidage agencée à proximité d'au moins une ouverture (4), ladite interface de guidage assurant une liaison rotule avec une partie longitudinal (71) d'un fourreau (7).

8. Dispositif (1) selon l'une quelconque des revendications **1** à **7**, **caractérisé en ce que** l'interface de liaison (6) est amovible.

9. Dispositif (1) selon l'une quelconque des revendications **1** à **8**, comprenant, en outre, un système de fixation (3) dudit dispositif (1) à un support ; et un moyen de réglage de la position (5) dudit dispositif (1) du système de fixation (3).

10. Système de guidage pour l'entrainement d'un acte chirurgical **caractérisé en ce qu'**il comporte :
- un dispositif (1) selon l'une quelconque des revendications **1** à **9** ;
- un premier fourreau (7) comportant une partie (71) longitudinale et creuse introduite et maintenue dans l'une des ouvertures (4) dudit dispositif (1) et adaptée pour recevoir un outil chirurgical (8), ledit premier fourreau (7) assurant une liaison pivot-glissant pour le déplacement dudit outil (8).

11. Système de guidage selon la revendication **10**, **caractérisé en ce qu'**il comporte en outre :
- un second fourreau (7) comportant une portion (71) longitudinale et creuse introduite et maintenue dans une seconde ouverture (4) dudit dispositif (1) et adaptée pour recevoir un outil chirurgical (8), ledit second fourreau (7) assurant une liaison pivot-glissant pour le déplacement dudit outil (8).

12. Système de guidage selon la revendication **10** ou **11**, **caractérisé en ce que** au moins un fourreau (7) comprend une couche de matériau élastique (74) disposée sur la surface interne de la partie longitudinale (71) dudit fourreau (7).

13. Système de guidage selon l'une quelconque des revendications **10** à **12**, **caractérisé en ce qu'**il comprend au moins un outil chirurgical (8) comportant :
- une manette (82) ;
- une tige (81) destinée à être introduite dans l'une des ouvertures (4) ou dans une interface de liaison (6) du dispositif d'entrainement (1) ;
- une interface de commande (83) ;
- au moins un capteur d'orientation et au moins un capteur de positionnement de l'outil chirurgical (8) ; et
- au moins une interface de communication pour transmettre des données collectées par lesdits capteurs à un calculateur distant.

14. Système de guidage selon la revendication **13**, **caractérisé en ce qu'**il comprend :
- un capteur de l'activation de l'interface de commande (83) ou un capteur d'une partie fonctionnelle dudit outil chirurgical (8), générant un indicateur de commande, ledit capteur étant agencé sur l'outil chirurgical (8) ;
- un générateur d'une image d'une zone d'un corps d'un patient sur un afficheur, ledit générateur comportant un calculateur pour déterminer d'une part la valeur de l'indicateur de commande et d'autre part des orientations et des positions d'images à afficher sur un afficheur en fonction des données reçues des capteurs agencés sur la manette (82) ; et
- un afficheur vidéo affichant une reproduction d'une partie d'au moins un outil chirurgical (106) et d'un mouvement relatif à son activation lorsque l'indicateur de commande est généré et affichant la zone d'un corps (105) d'un patient.

## Patentansprüche

1. Trainingsvorrichtung (1) zur Durchführung eines chirurgischen Eingriffs, wobei die Vorrichtung (1) ein Gehäuse (2) umfasst mit:
- eine erste Oberfläche (9), die eine Operationsschnittstelle definiert, die dazu bestimmt ist, mindestens ein chirurgisches Werkzeug (8) aufzunehmen, wobei der Rest der Oberfläche des Gehäuses (2) eine Basis (21) bildet;
- eine Öffnung (4), die auf der ersten Oberfläche (9) angeordnet ist;
- eine Verbindungsschnittstelle (6), die am Umfang der Öffnung (4) gehalten wird; wobei die Verbindungsschnittstelle (6) dazu geeignet ist, eine Hülse (7) aufzunehmen und zu halten;
wobei die Vorrichtung (1) **dadurch gekennzeichnet ist, dass** die erste Oberfläche (9) einen beweglichen Abschnitt (10) in Bezug auf die Basis (21) aufweist, wobei die Öffnung (4) auf dem beweglichen Abschnitt (10) angeordnet ist.

2. Vorrichtung (1) nach Anspruch **1**, **dadurch gekennzeichnet, dass** die erste Oberfläche (9) eine weitere Öffnung (4) aufweist, die an einem anderen Abschnitt der ersten Oberfläche (9) angeordnet ist, der sich von dem beweglichen Abschnitt (10) unterscheidet.

3. Vorrichtung (1) nach Anspruch **2**, **dadurch gekennzeichnet, dass** der andere Abschnitt fest (11) mit der Basis (21) verbunden ist.

4. Vorrichtung (1) nach Anspruch **2**, **dadurch gekennzeichnet, dass** der andere Abschnitt ebenfalls beweglich (10) in Bezug auf die Basis (21) ist.

5. Vorrichtung (1) nach einem der Ansprüche **1** bis **4**, **dadurch gekennzeichnet, dass** sie mindestens eine Gleitschiene umfasst, die so konfiguriert ist, dass sie mit mindestens einem beweglichen Abschnitt (10) zusammenwirkt, um eine Translationsbewegung des mindestens einen beweglichen Abschnittes (10) zu ermöglichen.

6. Vorrichtung (1) nach Anspruch **1**, **dadurch gekennzeichnet, dass** die Verbindungsschnittstelle (6) ein Elastomer, einen Schaum, ein Silikongel oder einen Kunststoff mit einem Elastizitätsmodul zwischen 0,002 MPa und 50 MPa umfasst.

7. Vorrichtung (1) nach einem der Ansprüche **1** bis **6**, **dadurch gekennzeichnet, dass** das Gehäuse (2) mindestens eine Führungsschnittstelle umfasst, die in der Nähe mindestens einer Öffnung (4) angeordnet ist, wobei die Führungsschnittstelle eine Kugelgelenkverbindung mit einem Längsabschnitt (71) einer Hülse (7) gewährleistet.

8. Vorrichtung (1) nach einem der Ansprüche **1** bis **7**, **dadurch gekennzeichnet, dass** die Verbindungsschnittstelle (6) abnehmbar ist.

9. Vorrichtung (1) nach einem der Ansprüche **1** bis **8**, ferner umfassend ein System (3) zur Befestigung der Vorrichtung (1) an einem Träger; und Mittel zum Einstellen der Position (5) der Vorrichtung (1) des Befestigungssystems (3).

10. Führungssystem zum Trainieren eines chirurgischen Eingriffs, **dadurch gekennzeichnet, dass** es umfasst:
- eine Vorrichtung (1) nach einem der Ansprüche **1** bis **9**;
- eine erste Hülse (7) mit einem länglichen und hohlen Teil (71), der in eine der Öffnungen (4) der Vorrichtung (1) eingeführt und dort gehalten wird und zur Aufnahme eines chirurgischen Werkzeugs (8) geeignet ist, wobei die erste Hülse (7) eine Dreh-Gleit-Verbindung zur Bewegung des Werkzeugs (8) gewährleistet.

11. Führungssystem nach Anspruch **10**, **dadurch gekennzeichnet, dass** es außerdem umfasst:
- eine zweite Hülse (7) mit einem länglichen und hohlen Abschnitt (71), der in eine zweite Öffnung (4) der Vorrichtung (1) eingeführt und dort gehalten wird und zur Aufnahme eines chirurgischen Werkzeugs (8) geeignet ist, wobei die zweite Hülse (7) eine Dreh-Gleitverbindung für die Bewegung des Werkzeugs (8) gewährleistet.

12. Führungssystem nach Anspruch **10** oder **11**, **dadurch gekennzeichnet, dass** mindestens eine Hülse (7) eine Schicht aus elastischem Material (74) umfasst, die an der Innenfläche des Längsabschnitts (71) der Hülse (7) angeordnet ist.

13. Führungssystem nach einem der Ansprüche **10** bis **12**, **dadurch gekennzeichnet, dass** es mindestens ein chirurgisches Werkzeug (8) umfasst, mit:
- einem Handgriff (82);
- einen Schaft (81), der dazu bestimmt ist, in eine der Öffnungen (4) oder in eine Verbindungsschnittstelle (6) der Antriebsvorrichtung (1) eingeführt zu werden;
- eine Steuerschnittstelle (83);
- mindestens einen Sensor für die Ausrichtung und mindestens einen Sensor für die Positionierung des chirurgischen Werkzeugs (8); und
- mindestens eine Kommunikationsschnittstelle zur Übertragung der von den Sensoren gesammelten Daten an einen entfernten Rechner.

14. Führungssystem nach Anspruch 13, **dadurch gekennzeichnet, dass** es umfasst:
- einen Sensor für die Aktivierung der Steuerschnittstelle (83) oder einen Sensor für einen funktionellen Teil des chirurgischen Werkzeugs (8), der einen Steuerindikator erzeugt, wobei der Sensor an dem chirurgischen Werkzeug (8) angeordnet ist;
- einen Generator eines Bildes eines Bereichs eines Körpers eines Patienten auf einem Display, wobei der Generator einen Rechner umfasst, um einerseits den Wert des Steuerindikators und andererseits Ausrichtungen und Positionen von Bildern zu bestimmen, die auf einem Display anzuzeigen sind, in Abhängigkeit von Daten, die von Sensoren empfangen werden, die auf dem Hebel (82) angeordnet sind; und
- eine Videoanzeige, die eine Wiedergabe eines Teils mindestens eines chirurgischen Werkzeugs (106) und einer Bewegung in Bezug auf seine Aktivierung anzeigt, wenn der Steuerindikator erzeugt wird, und die den Bereich eines Körpers (105) eines Patienten anzeigt.

## Claims

1. Training device (1) for performing a surgical procedure, said device (1) comprising an enclosure (2) including:
- a first surface (9) defining an operation interface intended to receive at least one surgical tool (8), the remainder of the surface of the enclosure (2) forming a base (21);
- an opening (4) arranged on said first surface (9);
- a connection interface (6) maintained at the circumference of said opening (4); said connection interface (6) being suitable for receiving and supporting a sheath (7);
said device (1) being **characterised in that** the first surface (9) includes a moveable portion (10) in relation to the base (21), said opening (4) being arranged on said moveable portion (10),

2. Device (1) according to claim **1**, **characterised in that** the first surface (9) includes another opening (4) arranged on another portion of the first surface (9), separate from said moveable portion (10).

3. Device (1) according to claim **2**, **characterised in that** said other portion is integral (11) with the base (21).

4. Device (1) according to claim **2**, **characterised in that** said other portion is also moveable (10) in relation with the base (21).

5. Device (1) according to claim **1** to **4**, **characterised in that** it includes at least one slide configured to engage with at least one moveable portion (10), so as to enable a translational movement of said at least one moveable portion (10).

6. Device (1) according to claim **1**, **characterised in that** said connection interface (6) comprises an elastomer, a foam, a silicone gel or a plastic material whereof the Young's modulus is between 0.002 MPa and 50 MPa.

7. Device (1) according to one of claims **1** to **6**, **characterised in that** the enclosure (2) comprises at least one guiding interface arranged close to at least one opening (4), said guiding interface providing a ball joint connection with a longitudinal portion (71) of a sheath (7).

8. Device (1) according to any one of claims **1** to **7**, **characterised in that** the connection interface (6) is removable.

9. Device (1) according to any one of claims **1** to **8**, further comprising a system for attaching (3) said device (1) to a support; and a means for adjusting the position (5) of said device (1) of the attachment system (3).

10. Guiding system for the training of a surgical procedure **characterised in that** it includes:
- a device (1) according to any one of claims **1** to **9**;
- a first sheath (7) including a hollow and longitudinal portion (71) introduced into and maintained in one of the openings (4) of said device (1) and suitable for receiving a surgical tool (8), said first sheath (7) providing a sliding pivot connection for the movement of said tool (8).

11. Guiding system according to claim **10**, **characterised in that** it further includes:
- a second sheath (7) including a hollow and longitudinal portion (71) introduced into and maintained in a second opening (4) of said device (1) and suitable for receiving a surgical tool (8), said second sheath (7) providing a sliding pivot connection for the movement of said tool (8).

12. Guiding system according to claim **10** or **11**, **characterised in that** at least one sheath (7) comprises an elastic material layer (74) placed on the inner surface of the longitudinal portion (71) of said sheath (7).

13. Guiding system according to anyone of claims **10** to **12**, **characterised in that** it comprises at least one surgical tool (8) including:
- a lever (82);
- a shaft (81) intended to be introduced into one of the openings (4) or into a connection interface (6) of the training device (1);
- a control interface (83);
- at least one orientation sensor and at least one positioning sensor of the surgical tool (8); and
- at least one communication interface for transmitting data collected by said sensors to a remote computer.

14. Guiding system according to claim **13**, **characterised in that** it comprises:
- a sensor of the activation of the control interface (83) or a sensor of a functional portion of said surgical tool (8), generating a control indicator, said sensor being arranged on the surgical tool (8);
- a generator of an image of an area of a body of a patient on a display, said generator including a computer for determining on one hand the value of the control indicator and on the other hand orientations and positions of images to be displayed on a display depending on data received from the sensors arranged on the lever (82); and
- a video display displaying a reproduction of a portion of at least one surgical tool (106) and of a movement relative to the activation thereof when the control indicator is generated and displaying the area of a body (105) of a patient.
